# EUROPEAN PATENT APPLICATION

(11) **EP 4 823 177 A1**
(43) Date of publication of application: **14.10.2026**
(21) Application number: 24916715.6
(22) Date of filing: 23.12.2024
(51) Int. Cl.: H04W 36/00

(54) **CELL HANDOVER METHOD AND APPARATUS, AND DEVICE**

(30) Priority: 08.01.2024 CN 202410024336
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: XIE, Fang, Beijing 100032 (CN)
(74) Representative: Hertin und Partner Rechts- und Patentanwälte PartG mbB
(86) International application number: PCT/CN2024/141379
(87) International publication number: WO 2025/148668

(57) **Abstract**

A cell handover method, apparatus and device are provided. The cell handover method includes: receiving first prediction information that is related to cell handover and sent by a terminal; selecting at least one candidate target cell; sending a first message to a second network device where the selected at least one candidate target cell is located, wherein the first message is used to initiate a handover request; after receiving a response message to the first message sent by the second network device, sending a second message to the terminal, wherein the second message is used to instruct the terminal to hand over to one of the selected at least one candidate target cell.

## Description

### CROSS-REFERENCE TO RELATED APPLICATION

The present application claims priority to Chinese Patent Application No. 202410024336.5 filed in China on January 8, 2024, a disclosure of which is incorporated herein by reference in its entirety.

### TECHNICAL FIELD

The present disclosure relates to the field of communication technologies, and in particular, to a cell handover method, apparatus and device.

### BACKGROUND

Currently, Artificial Intelligence (AI) or Machine Learning (ML) technologies have been introduced into several important scenarios in the mobile communication field (for example, Network Energy Saving, Load Balancing, and Mobility Optimization), such that corresponding predictions or strategies can be output through analysis and automatic processing of a large amount of collected data, thereby facilitating the handling of complex problems that are difficult to model and better improving network management and user experience. Specifically, for example, in scenarios where AI technologies operate at an air interface and higher-layer domains: data is collected for AI or ML model training and management, and AI or ML models are used to generate prediction results or inference strategies; after the strategies are executed, performance parameters related to a User Equipment (UE), also referred to as a terminal, or a base station are further input into the AI model training, thereby helping to refine the AI model to be more accurate.

In a connected-state mobility management mechanism, a base station determines, based on information such as a measurement result reported by a UE and a load of a target cell, a candidate target cell for UE handover, negotiates with the target cell regarding related resources for accessing the target cell to be used after the UE handover, and then instructs the UE to perform the handover.

However, in the related art, the handover is dominated by a source base station, including the timing of the handover and selection of the target cell. Therefore, factors on the UE side that can be considered during handover are relatively limited, which may lead to inaccurate determination of the handover timing and the target cell by the source base station based on the measurement results reported by the UE (for example, not conforming to an actual movement trajectory of the UE), thereby possibly resulting in handover failure.
Accordingly, a cell handover solution in the related art has problems such as a certain proportion of handover failures.

### SUMMARY

An objective of the present disclosure is to provide a cell handover method, apparatus and device, so as to solve a problem in related art that a cell handover solution has a certain proportion of handover failures.

To solve the above technical problem, an embodiment of the present disclosure provides a cell handover method, applied to a first network device, including:
receiving first prediction information that is related to cell handover and sent by a terminal;
selecting at least one candidate target cell;
sending a first message to a second network device where the selected at least one candidate target cell is located, wherein the first message is used to initiate a handover request;
after receiving a response message to the first message sent by the second network device, sending a second message to the terminal, wherein the second message is used to instruct the terminal to hand over to one of the selected at least one candidate target cell.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the at least one candidate target cell is selected based on the first prediction information and candidate target cell information.

Optionally, the first message carries third information corresponding to the selected at least one candidate target cell; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to the at least one candidate target cell, the handover-related information includes at least one of: random access resource information, a cell radio network temporary identifier (C-RNTI), system information, or terminal access related time information; and/or
the second message carries target cell handover related information, and the target cell handover related information includes at least one of: random access resource information, a C-RNTI, system information, or terminal access related time information.

Optionally, the terminal access related time information carried in the handover-related information includes: time information for a terminal to access a beam; and/or
the terminal access related time information carried in the target cell handover related information includes: time information for a terminal to access a beam.

Optionally, the selecting the at least one candidate target cell includes:
selecting the at least one candidate target cell by using an AI or ML model.

Optionally, the cell handover method further includes:
receiving terminal-performance-related information sent by the second network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the cell handover method further includes:
updating a local AI or ML model based on the terminal-performance-related information.

An embodiment of the present disclosure further provides a cell handover method, applied to a second network device, including:
receiving a first message sent by a first network device, wherein the first message is used to initiate a handover request;
sending, to the first network device, a response message to the first message.

Optionally, before sending, to the first network device, the response message to the first message, the cell handover method further includes:
determining whether to allow a terminal corresponding to the handover request to access at least one candidate target cell under the second network device, to obtain a determination result;
obtaining the response message to the first message based on the determination result.

Optionally, the determining whether to allow the terminal corresponding to the handover request to access at least one candidate target cell under the second network device to obtain the determination result includes:
determining, based on the handover request, whether to allow the terminal corresponding to the handover request to access at least one candidate target cell under the second network device, to obtain the determination result.

Optionally, the first message carries third information corresponding to at least one candidate target cell selected by the first network device; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to at least one candidate target cell, the handover-related information includes at least one of: random access resource information, a C-RNTI, system information, or terminal access related time information.

Optionally, the terminal access related time information carried in the handover-related information includes: time information for a terminal to access a beam.

Optionally, the cell handover method further includes:
obtaining terminal-performance-related information of a terminal corresponding to the first message;
sending the terminal-performance-related information to the first network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the obtaining terminal-performance-related information of the terminal includes at least one of:
obtaining, through statistics, first performance-related information after the terminal accesses a target cell;
receiving second performance-related information sent by the terminal; wherein
the first performance-related information includes at least one of: the downlink packet delay information, the downlink throughput information, the actual cell residence duration, or the duration of the operation under the access beam;
the second performance-related information includes at least one of: the uplink packet delay information, the uplink throughput information, the actual cell residence duration, or the duration of the operation under the access beam.

Optionally, the terminal-performance-related information of the terminal is obtained based on the first performance-related information and the second performance-related information.

An embodiment of the present disclosure further provides a cell handover method, applied to a terminal, including:
obtaining first prediction information related to cell handover;
sending the first prediction information to a first network device;
receiving a second message sent by the first network device, wherein the second message is used to instruct the terminal to hand over to one of candidate target cells selected by the first network device;
performing a cell handover operation.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the second message carries target cell handover related information, and the target cell handover related information includes at least one of: random access resource information, a C-RNTI, system information, or terminal access related time information.

Optionally, the terminal access related time information carried in the target cell handover related information includes: time information for a terminal to access a beam.

Optionally, when the target cell handover related information includes the terminal access related time information, the performing the cell handover operation includes:
performing the cell handover operation within a time corresponding to the terminal access related time information.

Optionally, the cell handover method further includes:
obtaining, through statistics, second performance-related information after the terminal accesses a target cell;
sending the second performance-related information to a second network device where the target cell is located; wherein
the second performance-related information includes at least one of: uplink packet delay information, uplink throughput information, an actual cell residence duration, or a duration of operation under an access beam.

Optionally, the performing the cell handover operation includes:
performing the cell handover operation based on the second message.

An embodiment of the present disclosure further provides a cell handover apparatus, applied to a first network device, including:
a first receiving module configured to receive first prediction information that is related to cell handover and sent by a terminal;
a first processing module configured to select at least one candidate target cell;
a first sending module configured to send a first message to a second network device where the selected at least one candidate target cell is located, wherein the first message is used to initiate a handover request;
a second sending module configured to, after receiving a response message to the first message sent by the second network device, send a second message to the terminal, wherein the second message is used to instruct the terminal to hand over to one of the selected at least one candidate target cell.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the at least one candidate target cell is selected based on the first prediction information and candidate target cell information.

Optionally, the first message carries third information corresponding to the selected at least one candidate target cell; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to the at least one candidate target cell, the handover-related information includes at least one of: random access resource information, a C-RNTI, system information, or terminal access related time information; and/or
the second message carries target cell handover related information, and the target cell handover related information includes at least one of: random access resource information, a C-RNTI, system information, or terminal access related time information.

Optionally, the terminal access related time information carried in the handover-related information includes: time information for a terminal to access a beam; and/or
the terminal access related time information carried in the target cell handover related information includes: time information for a terminal to access a beam.

Optionally, the selecting the at least one candidate target cell includes:
selecting the at least one candidate target cell by using an AI or ML model.

Optionally, the cell handover apparatus further includes:
a second receiving module configured to receive terminal-performance-related information sent by the second network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the cell handover apparatus further includes:
a second processing module configured to update a local AI or ML model based on the terminal-performance-related information.

An embodiment of the present disclosure further provides a cell handover apparatus, applied to a second network device, including:
a third receiving module configured to receive a first message sent by a first network device, wherein the first message is used to initiate a handover request;
a third sending module configured to send, to the first network device, a response message to the first message.

Optionally, the cell handover apparatus further includes:
a first determining module configured to, before sending, to the first network device, the response message to the first message, determine whether to allow a terminal corresponding to the handover request to access at least one candidate target cell under the second network device, to obtain a determination result;
a third processing module configured to obtain the response message to the first message based on the determination result.

Optionally, the determining whether to allow the terminal corresponding to the handover request to access at least one candidate target cell under the second network device to obtain the determination result includes:
determining, based on the handover request, whether to allow the terminal corresponding to the handover request to access at least one candidate target cell under the second network device, to obtain the determination result.

Optionally, the first message carries third information corresponding to at least one candidate target cell selected by the first network device; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to at least one candidate target cell, the handover-related information includes at least one of: random access resource information, a C-RNTI, system information, or terminal access related time information.

Optionally, the terminal access related time information carried in the handover-related information includes: time information for a terminal to access a beam.

Optionally, the cell handover apparatus further includes:
a first obtaining module configured to obtain terminal-performance-related information of a terminal corresponding to the first message;
a fourth sending module configured to send the terminal-performance-related information to the first network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the obtaining terminal-performance-related information of the terminal includes at least one of:
obtaining, through statistics, first performance-related information after the terminal accesses a target cell;
receiving second performance-related information sent by the terminal; wherein
the first performance-related information includes at least one of: the downlink packet delay information, the downlink throughput information, the actual cell residence duration, or the duration of the operation under the access beam;
the second performance-related information includes at least one of: the uplink packet delay information, the uplink throughput information, the actual cell residence duration, or the duration of the operation under the access beam.

Optionally, the terminal-performance-related information of the terminal is obtained based on the first performance-related information and the second performance-related information.

An embodiment of the present disclosure further provides a cell handover apparatus, applied to a terminal, including:
a second obtaining module configured to obtain first prediction information related to cell handover;
a fifth sending module configured to send the first prediction information to a first network device;
a fourth receiving module configured to receive a second message sent by the first network device, wherein the second message is used to instruct the terminal to hand over to one of candidate target cells selected by the first network device;
a fourth processing module configured to perform a cell handover operation.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the second message carries target cell handover related information, and the target cell handover related information includes at least one of: random access resource information, a C-RNTI, system information, or terminal access related time information.

Optionally, the terminal access related time information carried in the target cell handover related information includes: time information for a terminal to access a beam.

Optionally, when the target cell handover related information includes the terminal access related time information, the performing the cell handover operation includes:
performing the cell handover operation within a time corresponding to the terminal access related time information.

Optionally, the cell handover apparatus further includes:
a fifth processing module configured to obtain, through statistics, second performance-related information after the terminal accesses a target cell;
a sixth sending module configured to send the second performance-related information to a second network device where the target cell is located; wherein
the second performance-related information includes at least one of: uplink packet delay information, uplink throughput information, an actual cell residence duration, or a duration of operation under an access beam.

Optionally, the performing the cell handover operation includes:
performing the cell handover operation based on the second message.

An embodiment of the present disclosure further provides a cell handover device, wherein the cell handover device is a first network device, and includes a processor and a transceiver;
the processor is configured to receive, via the transceiver, first prediction information that is related to cell handover and sent by a terminal;
select at least one candidate target cell;
send, via the transceiver, a first message to a second network device where the selected at least one candidate target cell is located, wherein the first message is used to initiate a handover request;
after receiving a response message to the first message sent by the second network device, send, via the transceiver, a second message to the terminal, wherein the second message is used to instruct the terminal to hand over to one of the selected at least one candidate target cell.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the at least one candidate target cell is selected based on the first prediction information and candidate target cell information.

Optionally, the first message carries third information corresponding to the selected at least one candidate target cell; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to the at least one candidate target cell, the handover-related information includes at least one of: random access resource information, a C-RNTI, system information, or terminal access related time information; and/or
the second message carries target cell handover related information, and the target cell handover related information includes at least one of: random access resource information, a C-RNTI, system information, or terminal access related time information.

Optionally, the terminal access related time information carried in the handover-related information includes: time information for a terminal to access a beam; and/or
the terminal access related time information carried in the target cell handover related information includes: time information for a terminal to access a beam.

Optionally, the selecting the at least one candidate target cell includes:
selecting the at least one candidate target cell by using an AI or ML model.

Optionally, the processor is further configured to:
receive, via the transceiver, terminal-performance-related information sent by the second network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the processor is further configured to:
update a local AI or ML model based on the terminal-performance-related information.

An embodiment of the present disclosure further provides a cell handover device, wherein the cell handover device is a second network device, and includes a processor and a transceiver;
the processor is configured to receive, via the transceiver, a first message sent by a first network device, wherein the first message is used to initiate a handover request;
send, to the first network device via the transceiver, a response message to the first message.

Optionally, the processor is further configured to:
before sending, to the first network device, the response message to the first message, determine whether to allow a terminal corresponding to the handover request to access at least one candidate target cell under the second network device, to obtain a determination result;
obtain the response message to the first message based on the determination result.

Optionally, the determining whether to allow the terminal corresponding to the handover request to access at least one candidate target cell under the second network device to obtain the determination result includes:
determining, based on the handover request, whether to allow the terminal corresponding to the handover request to access at least one candidate target cell under the second network device, to obtain the determination result.

Optionally, the first message carries third information corresponding to at least one candidate target cell selected by the first network device; wherein
the third information includes at least one of: a cell residence duration, a cell access probability, an access beam identifier or a synchronization signal block identifier or a channel state information reference signal identifier, a residence duration within coverage of an access beam, or terminal access related time information.

Optionally, the response message carries handover-related information corresponding to at least one candidate target cell, the handover-related information includes at least one of: random access resource information, a C-RNTI, system information, or terminal access related time information.

Optionally, the terminal access related time information carried in the handover-related information includes: time information for a terminal to access a beam.

Optionally, the processor is further configured to:
obtain terminal-performance-related information of a terminal corresponding to the first message;
send, via the transceiver, the terminal-performance-related information to the first network device; wherein
the terminal-performance-related information includes at least one of:
   uplink packet delay information;
   uplink throughput information;
   an actual cell residence duration;
   a duration of operation under an access beam;
   downlink packet delay information; or
   downlink throughput information.

Optionally, the obtaining terminal-performance-related information of the terminal includes at least one of:
obtaining, through statistics, first performance-related information after the terminal accesses a target cell;
receiving, via the transceiver, second performance-related information sent by the terminal; wherein
the first performance-related information includes at least one of: the downlink packet delay information, the downlink throughput information, the actual cell residence duration, or the duration of the operation under the access beam;
the second performance-related information includes at least one of: the uplink packet delay information, the uplink throughput information, the actual cell residence duration, or the duration of the operation under the access beam.

Optionally, the terminal-performance-related information of the terminal is obtained based on the first performance-related information and the second performance-related information.

An embodiment of the present disclosure further provides a cell handover device, wherein the cell handover device is a terminal, and includes a processor and a transceiver;
the processor is configured to obtain first prediction information related to cell handover;
send, via the transceiver, the first prediction information to a first network device;
receive, via the transceiver, a second message sent by the first network device, wherein the second message is used to instruct the terminal to hand over to one of candidate target cells selected by the first network device;
perform a cell handover operation.

Optionally, the first prediction information includes first information corresponding to at least one predicted cell; wherein
the first information includes at least one of: identification information, a cell residence duration, a cell access probability, an access beam identifier or a synchronization signal block identifier or a channel state information reference signal identifier, a residence duration within coverage of an access beam, or terminal handover related time information.

Optionally, the first prediction information is obtained based on second information; the second information includes historical movement information.

Optionally, the second message carries target cell handover related information, and the target cell handover related information includes at least one of: random access resource information, a C-RNTI, system information, or terminal access related time information.

Optionally, the terminal access related time information carried in the target cell handover related information includes: time information for a terminal to access a beam.

Optionally, when the target cell handover related information includes the terminal access related time information, the performing the cell handover operation includes:
performing the cell handover operation within a time corresponding to the terminal access related time information.

Optionally, the processor is further configured to:
obtain, through statistics, second performance-related information after the terminal accesses a target cell;
send, via the transceiver, the second performance-related information to a second network device where the target cell is located; wherein
the second performance-related information includes at least one of: uplink packet delay information, uplink throughput information, an actual cell residence duration, or a duration of operation under an access beam.

Optionally, the performing the cell handover operation includes:
performing the cell handover operation based on the second message.

An embodiment of the present disclosure further provides a cell handover device, including a memory, a processor, and a program stored in the memory and executable on the processor; wherein the processor, when executing the program, implements the cell handover method on the first network device side, the second network device side, or the terminal side.

An embodiment of the present disclosure further provides a readable storage medium storing a program, wherein the program, when executed by a processor, implements the steps of the cell handover method on the first network device side, the second network device side, or the terminal side.

An embodiment of the present disclosure provides a computer program product, including computer instructions, wherein the computer instructions, when executed by a processor, implement the steps of the cell handover method described above.

The beneficial effects of the above technical solutions of the present disclosure are as follows:
in the above solution, the cell handover method includes: receiving first prediction information that is related to cell handover and sent by a terminal; selecting at least one candidate target cell; sending a first message to a second network device where the selected at least one candidate target cell is located, wherein the first message is used to initiate a handover request; after receiving a response message to the first message sent by the second network device, sending a second message to the terminal, wherein the second message is used to instruct the terminal to hand over to one of the selected at least one candidate target cell. Thus, a candidate target cell can be selected in combination with prediction information of the terminal itself, and then cell handover is performed. In this way, factors on the UE side can be more fully considered, handover accuracy is improved, handover failure is avoided as much as possible, and the proportion of cell handover failures is reduced.

### BRIEF DESCRIPTION OF THE DRAWINGS

FIG. 1 is a schematic flowchart of a cell handover method according to an embodiment of the present disclosure;
FIG. 2 is another schematic flowchart of a cell handover method according to an embodiment of the present disclosure;
FIG. 3 is yet another schematic flowchart of a cell handover method according to an embodiment of the present disclosure;
FIG. 4 is a schematic structural diagram of a cell handover apparatus according to an embodiment of the present disclosure;
FIG. 5 is another schematic structural diagram of a cell handover apparatus according to an embodiment of the present disclosure;
FIG. 6 is yet another schematic structural diagram of a cell handover apparatus according to an embodiment of the present disclosure;
FIG. 7 is a schematic structural diagram of a cell handover device according to an embodiment of the present disclosure;
FIG. 8 is another schematic structural diagram of a cell handover device according to an embodiment of the present disclosure;
FIG. 9 is yet another schematic structural diagram of a cell handover device according to an embodiment of the present disclosure.

### DETAILED DESCRIPTION

To make the technical problems to be solved, the technical solutions, and the advantages of the present disclosure clearer, the present disclosure is described in detail below with reference to the accompanying drawings and specific embodiments.

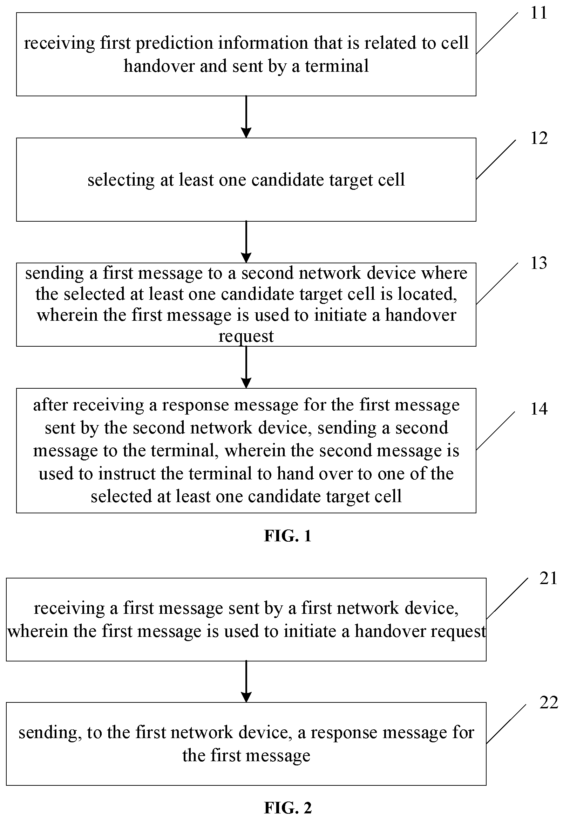

The present disclosure provides a cell handover method, applied to a first network device, to address the problem in the related art that a cell handover solution has a certain proportion of handover failures. As shown in FIG. 1, the method includes:
step 11: receiving first prediction information that is related to cell handover and sent by a terminal;
step 12: selecting at least one candidate target cell;
step 13: sending a first message to a second network device where the selected at least one candidate target cell is located, wherein the first message is used to initiate a handover request;
step 14: after receiving a response message to the first message sent by the second network device, sending a second message to the terminal, wherein the second message is used to instruct the terminal to hand over to one of the selected at least one candidate target cell.

The first network device may be implemented as a source base station, and the second network device may be implemented as a target base station, but is not limited thereto.

The cell handover method provided in the embodiment of the present disclosure includes: receiving first prediction information that is related to cell handover and sent by a terminal; selecting at least one candidate target cell; sending a first message to a second network device where the selected at least one candidate target cell is located, wherein the first message is used to initiate a handover request; after receiving a response message to the first message sent by the second network device, sending a second message to the terminal, wherein the second message is used to instruct the terminal to hand over to one of the selected at least one candidate target cell. Thus, a candidate target cell can be selected in combination with prediction information of the terminal itself, and then cell handover is performed. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

Thus, the first network device can select a candidate target cell more accurately. The terminal handover related time information may be time point information or time period information; and may be absolute time information or relative time information (e.g., absolute time: 10:00 a.m. or 10:00-10:02 a.m., or relative time: after 100 ms or between 100 ms and 10000 ms).

In the embodiment of the present disclosure, the first prediction information is obtained based on second information; the second information includes historical movement information.

Thus, the accuracy of the first prediction information can be ensured. The historical movement information may include a historical movement direction, speed, etc.

The at least one candidate target cell is selected based on the first prediction information and candidate target cell information.

Thus, the accuracy of candidate target cell selection can be improved. The candidate target cell information may include load information of candidate target cells, but is not limited thereto.

In the embodiment of the present disclosure, the first message carries third information corresponding to the selected at least one candidate target cell; wherein the third information includes at least one of: a cell residence duration, a cell access probability, an access beam identifier or a synchronization signal block identifier or a channel state information reference signal identifier, a residence duration within coverage of an access beam, or terminal access related time information.

Thus, the second network device can accurately determine a relevant candidate target cell. The terminal access related time information may include absolute time or relative time for the terminal to access the cell, which is not limited herein.

The response message carries handover-related information corresponding to the at least one candidate target cell, the handover-related information includes at least one of: random access resource information, a cell radio network temporary identifier (C-RNTI), system information, or terminal access related time information; and/or the second message carries target cell handover related information, and the target cell handover related information includes at least one of: random access resource information, a C-RNTI, system information, or terminal access related time information.

Thus, accurate determination and access of the target cell can be ensured. The system information may include system information required for a UE to access a cell, such as System Information Block (SIB) 1 and/or SIB 2, which is not limited herein.

In the embodiment of the present disclosure, the terminal access related time information carried in the handover-related information includes: time information for a terminal to access a beam; and/or the terminal access related time information carried in the target cell handover related information includes: time information for a terminal to access a beam.

Thus, time-related information of the access beam can be explicitly indicated.

The selecting the at least one candidate target cell includes: selecting the at least one candidate target cell by using an AI or ML model.

Thus, network management performance and user experience can be improved.

Further, the cell handover method further includes: receiving terminal-performance-related information sent by the second network device; wherein the terminal-performance-related information includes at least one of: uplink packet delay information; uplink throughput information; an actual cell residence duration; a duration of operation under an access beam; downlink packet delay information; or downlink throughput information.

Thus, the first network device can accurately obtain relevant performance information after the terminal accesses the target cell.

In the embodiment of the present disclosure, the cell handover method further includes: updating a local AI or ML model based on the terminal-performance-related information.

Thus, the accuracy of the model can be improved.

An embodiment of the present disclosure further provides a cell handover method, applied to a second network device. As shown in FIG. 2, the method includes:
step 21: receiving a first message sent by a first network device, wherein the first message is used to initiate a handover request;
step 22: sending, to the first network device, a response message to the first message.

The cell handover method provided in the embodiment of the present disclosure includes: receiving a first message sent by a first network device, wherein the first message is used to initiate a handover request; sending, to the first network device, a response message to the first message. Thus, the first network device can select a candidate target cell in combination with prediction information of the terminal itself, and then perform cell handover, thereby fully implementing the handover solution. In this way, factors on the UE side can be more fully considered, handover accuracy is improved, handover failure is avoided as much as possible, and the proportion of cell handover failures is reduced.

Further, before sending, to the first network device, the response message to the first message, the cell handover method further includes: determining whether to allow a terminal corresponding to the handover request to access at least one candidate target cell under the second network device, to obtain a determination result; obtaining the response message to the first message based on the determination result.

Thus, a response corresponding to the handover request can be accurately obtained.

The determining whether to allow the terminal corresponding to the handover request to access at least one candidate target cell under the second network device to obtain the determination result includes: determining, based on the handover request, whether to allow the terminal corresponding to the handover request to access at least one candidate target cell under the second network device, to obtain the determination result.

Thus, the above determination result can be accurately obtained.

In the embodiment of the present disclosure, the first message carries third information corresponding to at least one candidate target cell selected by the first network device; wherein the third information includes at least one of: a cell residence duration, a cell access probability, an access beam identifier or a synchronization signal block identifier or a channel state information reference signal identifier, a residence duration within coverage of an access beam, or terminal access related time information.

Thus, the second network device can be assisted in accurately determining a relevant candidate target cell.

The response message carries handover-related information corresponding to at least one candidate target cell, the handover-related information includes at least one of: random access resource information, a C-RNTI, system information, or terminal access related time information.

Thus, accurate determination of the target cell can be ensured.

In the embodiment of the present disclosure, the terminal access related time information carried in the handover-related information includes: time information for a terminal to access a beam.

Thus, time-related information of the access beam can be explicitly indicated.

Further, the cell handover method further includes: obtaining terminal-performance-related information of a terminal corresponding to the first message; sending the terminal-performance-related information to the first network device; wherein the terminal-performance-related information includes at least one of: uplink packet delay information; uplink throughput information; an actual cell residence duration; a duration of operation under an access beam; downlink packet delay information; or downlink throughput information.

Thus, the first network device can accurately obtain relevant performance information after the terminal accesses the target cell.

The obtaining terminal-performance-related information of the terminal includes at least one of: obtaining, through statistics, first performance-related information after the terminal accesses a target cell; receiving second performance-related information sent by the terminal; wherein the first performance-related information includes at least one of: the downlink packet delay information, the downlink throughput information, the actual cell residence duration, or the duration of the operation under the access beam; the second performance-related information includes at least one of: the uplink packet delay information, the uplink throughput information, the actual cell residence duration, or the duration of the operation under the access beam.

Thus, the terminal-performance-related information of the terminal can be accurately obtained.

In the embodiment of the present disclosure, the terminal-performance-related information of the terminal is obtained based on the first performance-related information and the second performance-related information.

Thus, the accuracy of the terminal-performance-related information can be improved.

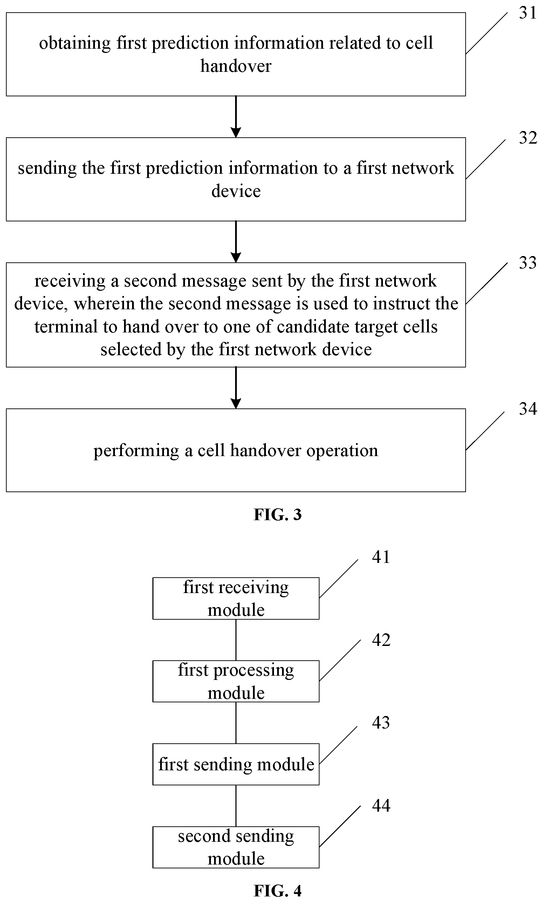

An embodiment of the present disclosure further provides a cell handover method, applied to a terminal. As shown in FIG. 3, the method includes:
step 31: obtaining first prediction information related to cell handover;
step 32: sending the first prediction information to a first network device;
step 33: receiving a second message sent by the first network device, wherein the second message is used to instruct the terminal to hand over to one of candidate target cells selected by the first network device;
step 34: performing a cell handover operation.

Step 34 may include: performing cell handover or accessing a target cell, which is not limited herein.

The cell handover method provided in the embodiment of the present disclosure includes: obtaining first prediction information related to cell handover; sending the first prediction information to a first network device; receiving a second message sent by the first network device, wherein the second message is used to instruct the terminal to hand over to one of candidate target cells selected by the first network device; performing a cell handover operation. Thus, the first network device can select a candidate target cell in combination with prediction information of the terminal itself, and then perform cell handover. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

Thus, the first network device can select a candidate target cell more accurately.

In the embodiment of the present disclosure, the first prediction information is obtained based on second information; the second information includes historical movement information.

Thus, the accuracy of the first prediction information can be ensured.

The second message carries target cell handover related information, and the target cell handover related information includes at least one of: random access resource information, a C-RNTI, system information, or terminal access related time information.

Thus, accurate access to the target cell can be ensured.

In the embodiment of the present disclosure, the terminal access related time information carried in the target cell handover related information includes: time information for a terminal to access a beam.

Thus, time-related information of the access beam can be explicitly indicated.

When the target cell handover related information includes the terminal access related time information, the performing the cell handover operation includes: performing the cell handover operation within a time corresponding to the terminal access related time information.

Thus, successful execution of the cell handover operation can be ensured as much as possible.

Further, the cell handover method further includes: obtaining, through statistics, second performance-related information after the terminal accesses a target cell; sending the second performance-related information to a second network device where the target cell is located; wherein the second performance-related information includes at least one of: uplink packet delay information, uplink throughput information, an actual cell residence duration, or a duration of operation under an access beam.

Thus, the second network device can accurately obtain the performance-related information obtained through statistics by the terminal.

The performing the cell handover operation includes: performing the cell handover operation based on the second message.

Thus, the cell handover operation can be accurately performed.

It should be noted that the relevant contents on the first network device side, the second network device side, and the terminal side can be referred to each other, and repeated descriptions are omitted herein.

The cell handover method provided in the embodiment of the present disclosure is described below by way of example, where the first network device is taken as a source base station, and the second network device is taken as a target base station.

For the above technical problems, an embodiment of the present disclosure provides a cell handover method, which may be specifically implemented as an AI-based mobility management method. It mainly involves that, in order to improve handover accuracy, a UE determines, based on richer historical information available to the UE, an appropriate handover timing, an accurate target cell, and related information (corresponding to the first prediction information described above), and reports the information to a source base station; the source base station then selects a target cell by combining information such as loads of candidate target cells (corresponding to the candidate target cell information described above), performs resource negotiation and preparation before handover, and notifies the UE to perform handover. Further, after handover, the UE may further report performance information such as uplink (UL) packet delay and throughput in the target cell (corresponding to the above second performance-related information), so as to help the source base station further optimize a handover model (corresponding to the above AI or ML model local to the first network device).

Specifically, this solution may include the following operations.
1. The UE reports predicted handover-related information (corresponding to the above first prediction information) to the source base station; the information may include at least one of: cell identifiers (cell IDs; corresponding to the above identification information) of one or more target cells to which handover can be performed, a residence duration in the cell (corresponding to the above cell residence duration, e.g., 600 ms), a probability of accessing the cell (corresponding to the above cell access probability, e.g., 60%, or the highest probability), an access beam identifier (beam ID) (or a synchronization signal block (SSB) ID or a channel state information reference signal (CSI-RS) ID) in the cell, a residence duration within coverage of the beam (corresponding to the above residence duration within coverage of an access beam), a time point for UE handover (e.g., absolute time: 10:00 a.m., or relative time: after 100 ms) or a time period for handover (e.g., 10:00-10:02 a.m., or between 100 ms and 10000 ms). The time point for UE handover or the time period for handover may correspond to the above terminal handover related time information.

Optionally, the information involved in the above handover-related information may be predicted by the UE using an AI model based on information such as a historical movement direction and speed (corresponding to the above historical movement information); the information may be reported to the source base station together with current measurement report information, or may be reported separately, which is not limited herein.

2. The source base station, based on the information reported by the UE and in combination with information such as loads of candidate target cells, selects an appropriate (at least one) target base station where a candidate target cell is located and sends a handover request message (corresponding to the above selecting at least one candidate target cell; sending a first message to a second network device where the selected candidate target cell is located, wherein the first message is used to initiate a handover request; the at least one candidate target cell is selected based on the first prediction information and candidate target cell information); the message may carry information such as a probability that the UE reaches the target cell, a residence duration, a beam ID (or an SSB ID or a CSI-RS ID) for accessing the cell, a residence duration within coverage of the beam, and an absolute or relative access time to the cell (corresponding to third information corresponding to the selected at least one candidate target cell carried in the first message, wherein the third information includes at least one of: a cell residence duration, a cell access probability, an access beam identifier or a synchronization signal block identifier or a channel state information reference signal identifier, a residence duration within coverage of an access beam, or terminal access related time information); when multiple candidate target cells allow the UE to access, the source base station may itself select one of them as a target cell for the UE to access, but is not limited thereto.

Optionally, the selection of a candidate target cell is predicted or determined by the source base station using an AI-based handover model based on information reported by the UE, etc.; corresponding to the above selecting the at least one candidate target cell by using an AI or ML model.

Regarding the selection of a candidate target cell, for example: among cells 1 to 4, only cells 2 and 3 are idle, then a candidate target cell can be further selected from cells 2 and 3 according to cell access probabilities corresponding to cells 2 and 3 respectively. For example, if the cell access probability of cell 2 is higher than that of cell 3, cell 2 can be used as a candidate target cell, but is not limited thereto.

3. The target base station performs admission control on the UE (corresponding to the above determining whether to allow a terminal corresponding to the handover request to access at least one candidate target cell under the second network device), and sends handover-related information (corresponding to the above handover-related information corresponding to the candidate target cell, such as random access (RA) resources to be used by the UE in the corresponding cell, a C-RNTI, system information, etc.) to the UE via the source base station; corresponding to the above second network device sends, to the first network device, a response message to the first message; the first network device, after receiving the response message to the first message sent by the second network device, sends a second message to the terminal, wherein the second message is used to instruct the terminal to hand over to one of the selected at least one candidate target cell.

The second message may carry a time at which the UE accesses the target cell, and may further indicate time information of a specific beam identifier (i.e., a time constraint for the terminal to access a beam, corresponding to time information for a terminal to access a beam). The time-related information may be predicted or determined, which is not limited herein.

4. The UE performs handover-related operations such as synchronization and random access with the target cell using the indicated beam according to the instruction of the handover command (corresponding to the above second message); corresponding to the above receiving the second message sent by the first network device, wherein the second message is used to instruct the terminal to hand over to one of candidate target cells selected by the first network device; performing the cell handover operation based on the second message.

If the handover command indicates time information for the UE to access the target cell and/or beam, the UE accesses the target cell and/or beam at the indicated time; corresponding to the above performing the cell handover operation within a time corresponding to the terminal access related time information.
5. After handover to the target cell, the UE collects, through statistics, performance-related information (corresponding to the above second performance-related information) over a period of time (the period of time may be configured to the UE by a network-side device, or determined by the UE itself, or defined in a protocol), such as uplink packet delay per cell or per beam (corresponding to the above uplink packet delay information), uplink throughput per cell or per beam (corresponding to the above uplink throughput information), a residence duration in the cell (corresponding to the above actual cell residence duration), and a duration of operation under (each) access beam (corresponding to the above duration of operation under an access beam).
6. The target base station collects, through statistics, performance-related information of the UE (corresponding to the above first performance-related information) over a period of time, such as downlink packet delay (corresponding to the above downlink packet delay information), downlink throughput (corresponding to the above downlink throughput information), a residence duration in the cell (corresponding to the above actual cell residence duration), and a duration of operation under each beam (corresponding to the above duration of operation under an access beam).
7. The UE reports the above statistical information to the target base station (corresponding to the above terminal sends the second performance-related information to the second network device where the target cell is located), and the target base station sends both its own performance information and the UE's performance information to a source base station (corresponding to the above obtaining terminal-performance-related information of the terminal corresponding to the first message; sending the terminal-performance-related information to the first network device; the terminal-performance-related information of the terminal is obtained based on the first performance-related information and the second performance-related information), so as to help the source base station refine a handover AI model (corresponding to the above first network device updates the local AI or ML model based on the terminal-performance-related information).

The UE may also refine a handover AI model by using the statistical information obtained by itself; that is, the UE updates its local AI model.

From the above, the solutions provided in the embodiments of the present disclosure include:
1) The terminal reports, to the source base station, handover-related information corresponding to a target cell predicted based on a local AI model; the source base station determines a final target cell for handover based on the information reported by the terminal and in combination with its own AI model;
2) based on 1), the UE records performance information after handover to the target cell, and reports it to the target base station; the target base station sends, based on the performance information reported by the UE and performance information obtained by itself, relevant information to the source base station, so as to optimize the handover AI model of the source base station.

In summary, the embodiments of the present disclosure provide a method for improving handover accuracy, thereby enabling higher handover efficiency and better satisfying UE requirements.

An embodiment of the present disclosure further provides a cell handover apparatus, applied to a first network device. As shown in FIG. 4, the apparatus includes:
a first receiving module 41 configured to receive first prediction information that is related to cell handover and sent by a terminal;
a first processing module 42 configured to select at least one candidate target cell;
a first sending module 43 configured to send a first message to a second network device where the selected at least one candidate target cell is located, wherein the first message is used to initiate a handover request;
a second sending module 44 configured to, after receiving a response message to the first message sent by the second network device, send a second message to the terminal, wherein the second message is used to instruct the terminal to hand over to one of the selected at least one candidate target cell.

The cell handover apparatus provided in the embodiment of the present disclosure includes: receiving first prediction information that is related to cell handover and sent by a terminal; selecting at least one candidate target cell; sending a first message to a second network device where the selected at least one candidate target cell is located, wherein the first message is used to initiate a handover request; after receiving a response message to the first message sent by the second network device, sending a second message to the terminal, wherein the second message is used to instruct the terminal to hand over to one of the selected at least one candidate target cell. Thus, a candidate target cell can be selected in combination with prediction information of the terminal itself, and then cell handover is performed. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

In the embodiment of the present disclosure, the first prediction information is obtained based on second information; the second information includes historical movement information.

The at least one candidate target cell is selected based on the first prediction information and candidate target cell information.

In the embodiment of the present disclosure, the first message carries third information corresponding to the selected at least one candidate target cell; wherein the third information includes at least one of: a cell residence duration, a cell access probability, an access beam identifier or a synchronization signal block identifier or a channel state information reference signal identifier, a residence duration within coverage of an access beam, or terminal access related time information.

The response message carries handover-related information corresponding to the at least one candidate target cell, the handover-related information includes at least one of: random access resource information, a C-RNTI, system information, or terminal access related time information; and/or the second message carries target cell handover related information, and the target cell handover related information includes at least one of: random access resource information, a C-RNTI, system information, or terminal access related time information.

In the embodiment of the present disclosure, the terminal access related time information carried in the handover-related information includes: time information for a terminal to access a beam; and/or the terminal access related time information carried in the target cell handover related information includes: time information for a terminal to access a beam.

The selecting the at least one candidate target cell includes: selecting the at least one candidate target cell by using an AI or ML model.

Further, the cell handover apparatus further includes: a second receiving module configured to receive terminal-performance-related information sent by the second network device; wherein the terminal-performance-related information includes at least one of: uplink packet delay information; uplink throughput information; an actual cell residence duration; a duration of operation under an access beam; downlink packet delay information; or downlink throughput information.

In the embodiment of the present disclosure, the cell handover apparatus further includes: a second processing module configured to update a local AI or ML model based on the terminal-performance-related information.

The implementation embodiments of the cell handover method on the first network device side are applicable to the embodiment of the cell handover apparatus, and the same technical effects can be achieved.

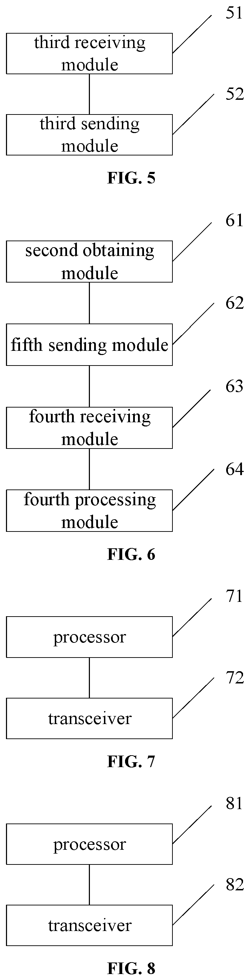

An embodiment of the present disclosure further provides a cell handover apparatus, applied to a second network device. As shown in FIG. 5, the apparatus includes:
a third receiving module 51 configured to receive a first message sent by a first network device, wherein the first message is used to initiate a handover request;
a third sending module 52 configured to send, to the first network device, a response message to the first message.

The cell handover apparatus provided in the embodiment of the present disclosure includes: receiving a first message sent by a first network device, wherein the first message is used to initiate a handover request; sending, to the first network device, a response message to the first message. Thus, the first network device can select a candidate target cell in combination with prediction information of the terminal itself, and then perform cell handover, thereby fully implementing the handover solution. In this way, factors on the UE side can be more fully considered, handover accuracy is improved, handover failure is avoided as much as possible, and the proportion of cell handover failures is reduced.

Further, the cell handover apparatus further includes: a first determining module configured to, before sending, to the first network device, the response message to the first message, determine whether to allow a terminal corresponding to the handover request to access at least one candidate target cell under the second network device, to obtain a determination result; a third processing module configured to obtain the response message to the first message based on the determination result.

The determining whether to allow the terminal corresponding to the handover request to access at least one candidate target cell under the second network device to obtain the determination result includes: determining, based on the handover request, whether to allow the terminal corresponding to the handover request to access at least one candidate target cell under the second network device, to obtain the determination result.

In the embodiment of the present disclosure, the first message carries third information corresponding to at least one candidate target cell selected by the first network device; wherein the third information includes at least one of: a cell residence duration, a cell access probability, an access beam identifier or a synchronization signal block identifier or a channel state information reference signal identifier, a residence duration within coverage of an access beam, or terminal access related time information.

The response message carries handover-related information corresponding to at least one candidate target cell, the handover-related information includes at least one of: random access resource information, a C-RNTI, system information, or terminal access related time information.

In the embodiment of the present disclosure, the terminal access related time information carried in the handover-related information includes: time information for a terminal to access a beam.

Further, the cell handover apparatus further includes: a first obtaining module configured to obtain terminal-performance-related information of a terminal corresponding to the first message; a fourth sending module configured to send the terminal-performance-related information to the first network device; wherein the terminal-performance-related information includes at least one of: uplink packet delay information; uplink throughput information; an actual cell residence duration; a duration of operation under an access beam; downlink packet delay information; or downlink throughput information.

The obtaining terminal-performance-related information of the terminal includes at least one of: obtaining, through statistics, first performance-related information after the terminal accesses a target cell; receiving second performance-related information sent by the terminal; wherein the first performance-related information includes at least one of: the downlink packet delay information, the downlink throughput information, the actual cell residence duration, or the duration of the operation under the access beam; the second performance-related information includes at least one of: the uplink packet delay information, the uplink throughput information, the actual cell residence duration, or the duration of the operation under the access beam.

In the embodiment of the present disclosure, the terminal-performance-related information of the terminal is obtained based on the first performance-related information and the second performance-related information.

The implementation embodiments of the cell handover method on the second network device side are applicable to the embodiment of the cell handover apparatus, and the same technical effects can be achieved.

An embodiment of the present disclosure further provides a cell handover apparatus, applied to a terminal. As shown in FIG. 6, the apparatus includes:
a second obtaining module 61 configured to obtain first prediction information related to cell handover;
a fifth sending module 62 configured to send the first prediction information to a first network device;
a fourth receiving module 63 configured to receive a second message sent by the first network device, wherein the second message is used to instruct the terminal to hand over to one of candidate target cells selected by the first network device;
a fourth processing module 64 configured to perform a cell handover operation.

The cell handover apparatus provided in the embodiment of the present disclosure includes: obtaining first prediction information related to cell handover; sending the first prediction information to a first network device; receiving a second message sent by the first network device, wherein the second message is used to instruct the terminal to hand over to one of candidate target cells selected by the first network device; performing a cell handover operation. Thus, the first network device can select a candidate target cell in combination with prediction information of the terminal itself, and then perform cell handover. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

In the embodiment of the present disclosure, the first prediction information is obtained based on second information; the second information includes historical movement information.

The second message carries target cell handover related information, and the target cell handover related information includes at least one of: random access resource information, a C-RNTI, system information, or terminal access related time information.

In the embodiment of the present disclosure, the terminal access related time information carried in the target cell handover related information includes: time information for a terminal to access a beam.

When the target cell handover related information includes the terminal access related time information, the performing the cell handover operation includes: performing the cell handover operation within a time corresponding to the terminal access related time information.

Further, the cell handover apparatus further includes: a fifth processing module configured to obtain, through statistics, second performance-related information after the terminal accesses a target cell; a sixth sending module configured to send the second performance-related information to a second network device where the target cell is located; wherein the second performance-related information includes at least one of: uplink packet delay information, uplink throughput information, an actual cell residence duration, or a duration of operation under an access beam.

In the embodiment of the present disclosure, the performing the cell handover operation includes: performing the cell handover operation based on the second message.

The implementation embodiments of the cell handover method on the terminal side are applicable to the embodiment of the cell handover apparatus, and the same technical effects can be achieved.

An embodiment of the present disclosure further provides a cell handover device, wherein the cell handover device is a first network device. As shown in FIG. 7, the device includes: a processor 71 and a transceiver 72;
the processor 71 is configured to receive, via the transceiver 72, first prediction information that is related to cell handover and sent by a terminal;
select at least one candidate target cell;
send, via the transceiver 72, a first message to a second network device where the selected at least one candidate target cell is located, wherein the first message is used to initiate a handover request;
after receiving a response message to the first message sent by the second network device, send, via the transceiver 72, a second message to the terminal, wherein the second message is used to instruct the terminal to hand over to one of the selected at least one candidate target cell.

The cell handover device provided in the embodiment of the present disclosure includes: receiving first prediction information that is related to cell handover and sent by a terminal; selecting at least one candidate target cell; sending a first message to a second network device where the selected at least one candidate target cell is located, wherein the first message is used to initiate a handover request; after receiving a response message to the first message sent by the second network device, sending a second message to the terminal, wherein the second message is used to instruct the terminal to hand over to one of the selected at least one candidate target cell. Thus, a candidate target cell can be selected in combination with prediction information of the terminal itself, and then cell handover is performed. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

In the embodiment of the present disclosure, the first prediction information is obtained based on second information; the second information includes historical movement information.

The at least one candidate target cell is selected based on the first prediction information and candidate target cell information.

In the embodiment of the present disclosure, the first message carries third information corresponding to the selected at least one candidate target cell; wherein the third information includes at least one of: a cell residence duration, a cell access probability, an access beam identifier or a synchronization signal block identifier or a channel state information reference signal identifier, a residence duration within coverage of an access beam, or terminal access related time information.

The response message carries handover-related information corresponding to the at least one candidate target cell, the handover-related information includes at least one of: random access resource information, a C-RNTI, system information, or terminal access related time information; and/or the second message carries target cell handover related information, and the target cell handover related information includes at least one of: random access resource information, a C-RNTI, system information, or terminal access related time information.

In the embodiment of the present disclosure, the terminal access related time information carried in the handover-related information includes: time information for a terminal to access a beam; and/or the terminal access related time information carried in the target cell handover related information includes: time information for a terminal to access a beam.

The selecting the at least one candidate target cell includes: selecting the at least one candidate target cell by using an AI or ML model.

Further, the processor is further configured to: receive, via the transceiver, terminal-performance-related information sent by the second network device; wherein the terminal-performance-related information includes at least one of: uplink packet delay information; uplink throughput information; an actual cell residence duration; a duration of operation under an access beam; downlink packet delay information; or downlink throughput information.

In the embodiment of the present disclosure, the processor is further configured to: update a local AI or ML model based on the terminal-performance-related information.

The implementation embodiments of the cell handover method on the first network device side are applicable to the embodiment of the cell handover device, and the same technical effects can be achieved.

An embodiment of the present disclosure further provides a cell handover device, wherein the cell handover device is a second network device. As shown in FIG. 8, the device includes: a processor 81 and a transceiver 82;
the processor 81 is configured to receive, via the transceiver 82, a first message sent by a first network device, wherein the first message is used to initiate a handover request;
send, to the first network device via the transceiver 82, a response message to the first message.

The cell handover device provided in the embodiment of the present disclosure includes: receiving a first message sent by a first network device, wherein the first message is used to initiate a handover request; sending, to the first network device, a response message to the first message. Thus, the first network device can select a candidate target cell in combination with prediction information of the terminal itself, and then perform cell handover, thereby fully implementing the handover solution. In this way, factors on the UE side can be more fully considered, handover accuracy is improved, handover failure is avoided as much as possible, and the proportion of cell handover failures is reduced.

Further, the processor is further configured to: before sending, to the first network device, the response message to the first message, determine whether to allow a terminal corresponding to the handover request to access at least one candidate target cell under the second network device, to obtain a determination result; obtain the response message to the first message based on the determination result.

The determining whether to allow the terminal corresponding to the handover request to access at least one candidate target cell under the second network device to obtain the determination result includes: determining, based on the handover request, whether to allow the terminal corresponding to the handover request to access at least one candidate target cell under the second network device, to obtain the determination result.

In the embodiment of the present disclosure, the first message carries third information corresponding to at least one candidate target cell selected by the first network device; wherein the third information includes at least one of: a cell residence duration, a cell access probability, an access beam identifier or a synchronization signal block identifier or a channel state information reference signal identifier, a residence duration within coverage of an access beam, or terminal access related time information.

The response message carries handover-related information corresponding to at least one candidate target cell, the handover-related information includes at least one of: random access resource information, a C-RNTI, system information, or terminal access related time information.

In the embodiment of the present disclosure, the terminal access related time information carried in the handover-related information includes: time information for a terminal to access a beam.

Further, the processor is further configured to: obtain terminal-performance-related information of a terminal corresponding to the first message; send, via the transceiver, the terminal-performance-related information to the first network device; wherein the terminal-performance-related information includes at least one of: uplink packet delay information; uplink throughput information; an actual cell residence duration; a duration of operation under an access beam; downlink packet delay information; or downlink throughput information.

The obtaining terminal-performance-related information of the terminal includes at least one of: obtaining, through statistics, first performance-related information after the terminal accesses a target cell; receiving, via the transceiver, second performance-related information sent by the terminal; wherein the first performance-related information includes at least one of: the downlink packet delay information, the downlink throughput information, the actual cell residence duration, or the duration of the operation under the access beam; the second performance-related information includes at least one of: the uplink packet delay information, the uplink throughput information, the actual cell residence duration, or the duration of the operation under the access beam.

In the embodiment of the present disclosure, the terminal-performance-related information of the terminal is obtained based on the first performance-related information and the second performance-related information.

The implementation embodiments of the cell handover method on the second network device side are applicable to the embodiment of the cell handover device, and the same technical effects can be achieved.

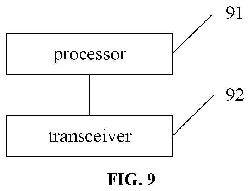

An embodiment of the present disclosure further provides a cell handover device, wherein the cell handover device is a terminal. As shown in FIG. 9, the device includes: a processor 91 and a transceiver 92;
the processor 91 is configured to obtain first prediction information related to cell handover;
send, via the transceiver 92, the first prediction information to a first network device;
receive, via the transceiver 92, a second message sent by the first network device, wherein the second message is used to instruct the terminal to hand over to one of candidate target cells selected by the first network device;
perform a cell handover operation.

The cell handover device provided in the embodiment of the present disclosure includes: obtaining first prediction information related to cell handover; sending the first prediction information to a first network device; receiving a second message sent by the first network device, wherein the second message is used to instruct the terminal to hand over to one of candidate target cells selected by the first network device; performing a cell handover operation. Thus, the first network device can select a candidate target cell in combination with prediction information of the terminal itself, and then perform cell handover. In this way, factors on the UE side can be more fully considered, handover accuracy is improved, handover failure is avoided as much as possible, and the proportion of cell handover failures is reduced.

The first prediction information includes first information corresponding to at least one predicted cell; wherein the first information includes at least one of: identification information, a cell residence duration, a cell access probability, an access beam identifier or a synchronization signal block identifier or a channel state information reference signal identifier, a residence duration within coverage of an access beam, or terminal handover related time information.

In the embodiment of the present disclosure, the first prediction information is obtained based on second information; the second information includes historical movement information.

The second message carries target cell handover related information, and the target cell handover related information includes at least one of: random access resource information, a C-RNTI, system information, or terminal access related time information.

In the embodiment of the present disclosure, the terminal access related time information carried in the target cell handover related information includes: time information for a terminal to access a beam.

When the target cell handover related information includes the terminal access related time information, the performing the cell handover operation includes: performing the cell handover operation within a time corresponding to the terminal access related time information.

Further, the processor is further configured to: obtain, through statistics, second performance-related information after the terminal accesses a target cell; send, via the transceiver, the second performance-related information to a second network device where the target cell is located; wherein the second performance-related information includes at least one of: uplink packet delay information, uplink throughput information, an actual cell residence duration, or a duration of operation under an access beam.

In the embodiment of the present disclosure, the performing the cell handover operation includes: performing the cell handover operation based on the second message.

The implementation embodiments of the cell handover method on the terminal side are applicable to the embodiment of the cell handover device, and the same technical effects can be achieved.

An embodiment of the present disclosure further provides a cell handover device, including a memory, a processor, and a program stored in the memory and executable on the processor; wherein the processor, when executing the program, implements the cell handover method on the first network device side, the second network device side, or the terminal side.

The implementation embodiments of the cell handover method on the first network device side, the second network device side, or the terminal side are applicable to the embodiment of the cell handover device, and the same technical effects can be achieved.

An embodiment of the present disclosure further provides a readable storage medium storing a program, wherein the program, when executed by a processor, implements the steps of the cell handover method on the first network device side, the second network device side, or the terminal side.

The implementation embodiments of the cell handover method on the first network device side, the second network device side, or the terminal side are applicable to the embodiment of the readable storage medium, and the same technical effects can be achieved.

An embodiment of the present application provides a computer program product, including computer instructions, wherein the computer instructions, when executed by a processor, implement the various processes of the cell handover method embodiments on the first network device side, the second network device side, or the terminal side as described above, and can achieve the same technical effects, which will not be repeated here to avoid repetition.

It should be noted that many functional components described in this specification are referred to as modules in order to more particularly emphasize the independence of their implementations.

In embodiments of the present disclosure, the modules may be implemented by software so that they can be executed by various types of processors. For example, an identified executable code module may include one or more physical or logical blocks of computer instructions. For example, the module may be organized as an object, a procedure, or a function. Nevertheless, executable code of the identified module does not need to be physically located together, and may include different instructions stored in different locations. When such instructions are logically combined, they constitute the module and implement the intended purpose of the module.

In practice, an executable code module may be a single instruction or many instructions, and may even be distributed over different code segments, among different programs, and across multiple memory devices. Similarly, operational data may be identified within a module, and may be implemented in any appropriate form and organized in any appropriate type of data structure. The operational data may be collected as a single data set, or may be distributed in different locations (including on different storage devices), and may be present at least partially only as electronic signals on a system or network.

When modules are implemented by software, considering the current level of hardware technology, corresponding hardware circuits can be constructed by those skilled in the art to implement corresponding functions without considering cost. The hardware circuits include conventional Very Large Scale Integration (VLSI) circuits or gate arrays, as well as existing semiconductors such as logic chips and transistors, or other discrete components. The modules may also be implemented by programmable hardware devices, such as field programmable gate arrays, programmable array logic, or programmable logic devices.

The above are preferred embodiments of the present disclosure. It should be noted that, for those of ordinary skill in the art, various improvements and modifications can be made without departing from the principles of the present disclosure, and such improvements and modifications shall also fall within the protection scope of the present disclosure.

## Claims

1. A cell handover method, applied to a first network device, the method comprising:
receiving first prediction information that is related to cell handover and sent by a terminal;
selecting at least one candidate target cell;
sending a first message to a second network device where the selected at least one candidate target cell is located, wherein the first message is used to initiate a handover request;
after receiving a response message to the first message sent by the second network device, sending a second message to the terminal, wherein the second message is used to instruct the terminal to hand over to one of the selected at least one candidate target cell.

2. The cell handover method according to claim 1, wherein the first prediction information comprises first information corresponding to at least one predicted cell, wherein
the first information comprises at least one of: identification information, a cell residence duration, a cell access probability, an access beam identifier or a synchronization signal block identifier or a channel state information reference signal identifier, a residence duration within coverage of an access beam, or terminal handover related time information.

3. The cell handover method according to claim 1, wherein the first prediction information is obtained based on second information; the second information comprises historical movement information.

4. The cell handover method according to claim 1, wherein the at least one candidate target cell is selected based on the first prediction information and candidate target cell information.

5. The cell handover method according to claim 1, wherein the first message carries third information corresponding to the selected at least one candidate target cell; wherein
the third information comprises at least one of: a cell residence duration, a cell access probability, an access beam identifier or a synchronization signal block identifier or a channel state information reference signal identifier, a residence duration within coverage of an access beam, or terminal access related time information.

6. The cell handover method according to claim 1, wherein the response message carries handover-related information corresponding to the at least one candidate target cell, the handover-related information comprises at least one of: random access resource information, a cell radio network temporary identifier (C-RNTI), system information, or terminal access related time information; and/or
the second message carries target cell handover related information, and the target cell handover related information comprises at least one of: random access resource information, a C-RNTI, system information, or terminal access related time information.

7. The cell handover method according to claim 6, wherein the terminal access related time information carried in the handover-related information comprises: time information for a terminal to access a beam; and/or
the terminal access related time information carried in the target cell handover related information comprises: time information for a terminal to access a beam.

8. The cell handover method according to any one of claims 1 to 7, wherein the selecting the at least one candidate target cell comprises:
selecting the at least one candidate target cell by using an artificial intelligence (AI) or machine learning (ML) model.

9. The cell handover method according to claim 1, further comprising:
receiving terminal-performance-related information sent by the second network device; wherein
the terminal-performance-related information comprises at least one of:
uplink packet delay information;
uplink throughput information;
an actual cell residence duration;
a duration of operation under an access beam;
downlink packet delay information; or
downlink throughput information.

10. The cell handover method according to claim 9, further comprising:
updating a local AI or ML model based on the terminal-performance-related information.

11. A cell handover method, applied to a second network device, the method comprising:
receiving a first message sent by a first network device, wherein the first message is used to initiate a handover request;
sending, to the first network device, a response message to the first message.

12. The cell handover method according to claim 11, wherein before sending, to the first network device, the response message to the first message, the cell handover method further comprises:
determining whether to allow a terminal corresponding to the handover request to access at least one candidate target cell under the second network device, to obtain a determination result;
obtaining the response message to the first message based on the determination result.

13. The cell handover method according to claim 12, wherein the determining whether to allow the terminal corresponding to the handover request to access at least one candidate target cell under the second network device to obtain the determination result comprises:
determining, based on the handover request, whether to allow the terminal corresponding to the handover request to access at least one candidate target cell under the second network device, to obtain the determination result.

14. The cell handover method according to claim 11, wherein the first message carries third information corresponding to at least one candidate target cell selected by the first network device; wherein
the third information comprises at least one of: a cell residence duration, a cell access probability, an access beam identifier or a synchronization signal block identifier or a channel state information reference signal identifier, a residence duration within coverage of an access beam, or terminal access related time information.

15. The cell handover method according to claim 11, wherein the response message carries handover-related information corresponding to at least one candidate target cell, the handover-related information comprises at least one of: random access resource information, a C-RNTI, system information, or terminal access related time information.

16. The cell handover method according to claim 15, wherein the terminal access related time information carried in the handover-related information comprises: time information for a terminal to access a beam.

17. The cell handover method according to claim 11, further comprising:
obtaining terminal-performance-related information of a terminal corresponding to the first message;
sending the terminal-performance-related information to the first network device; wherein
the terminal-performance-related information comprises at least one of:
uplink packet delay information;
uplink throughput information;
an actual cell residence duration;
a duration of operation under an access beam;
downlink packet delay information; or
downlink throughput information.

18. The cell handover method according to claim 17, wherein the obtaining terminal-performance-related information of the terminal comprises at least one of:
obtaining, through statistics, first performance-related information after the terminal accesses a target cell;
receiving second performance-related information sent by the terminal; wherein
the first performance-related information comprises at least one of: the downlink packet delay information, the downlink throughput information, the actual cell residence duration, or the duration of the operation under the access beam;
the second performance-related information comprises at least one of: the uplink packet delay information, the uplink throughput information, the actual cell residence duration, or the duration of the operation under the access beam.

19. The cell handover method according to claim 18, wherein the terminal-performance-related information of the terminal is obtained based on the first performance-related information and the second performance-related information.

20. A cell handover method, applied to a terminal, the method comprising:
obtaining first prediction information related to cell handover;
sending the first prediction information to a first network device;
receiving a second message sent by the first network device, wherein the second message is used to instruct the terminal to hand over to one of candidate target cells selected by the first network device;
performing a cell handover operation.

21. The cell handover method according to claim 20, wherein the first prediction information comprises first information corresponding to at least one predicted cell; wherein
the first information comprises at least one of: identification information, a cell residence duration, a cell access probability, an access beam identifier or a synchronization signal block identifier or a channel state information reference signal identifier, a residence duration within coverage of an access beam, or terminal handover related time information.

22. The cell handover method according to claim 21, wherein the first prediction information is obtained based on second information; the second information comprises historical movement information.

23. The cell handover method according to claim 20, wherein the second message carries target cell handover related information, and the target cell handover related information comprises at least one of: random access resource information, a C-RNTI, system information, or terminal access related time information.

24. The cell handover method according to claim 23, wherein the terminal access related time information carried in the target cell handover related information comprises: time information for a terminal to access a beam.

25. The cell handover method according to claim 23 or 24, wherein when the target cell handover related information comprises the terminal access related time information, the performing the cell handover operation comprises:
performing the cell handover operation within a time corresponding to the terminal access related time information.

26. The cell handover method according to claim 20, further comprising:
obtaining, through statistics, second performance-related information after the terminal accesses a target cell;
sending the second performance-related information to a second network device where the target cell is located; wherein
the second performance-related information comprises at least one of: uplink packet delay information, uplink throughput information, an actual cell residence duration, or a duration of operation under an access beam.

27. The cell handover method according to claim 20, wherein the performing the cell handover operation comprises:
performing the cell handover operation based on the second message.

28. A cell handover apparatus, applied to a first network device, the cell handover apparatus comprising:
a first receiving module configured to receive first prediction information that is related to cell handover and sent by a terminal;
a first processing module configured to select at least one candidate target cell;
a first sending module configured to send a first message to a second network device where the selected at least one candidate target cell is located, wherein the first message is used to initiate a handover request;
a second sending module configured to, after receiving a response message to the first message sent by the second network device, send a second message to the terminal, wherein the second message is used to instruct the terminal to hand over to one of the selected at least one candidate target cell.

29. A cell handover apparatus, applied to a second network device, the cell handover apparatus comprising:
a third receiving module configured to receive a first message sent by a first network device, wherein the first message is used to initiate a handover request;
a third sending module, configured to send, to the first network device, a response message to the first message.

30. A cell handover apparatus, applied to a terminal, the cell handover apparatus comprising:
a second obtaining module configured to obtain first prediction information related to cell handover;
a fifth sending module configured to send the first prediction information to a first network device;
a fourth receiving module configured to receive a second message sent by the first network device, wherein the second message is used to instruct the terminal to hand over to one of candidate target cells selected by the first network device;
a fourth processing module configured to perform a cell handover operation.

31. A cell handover device, wherein the cell handover device is a first network device, and comprises a processor and a transceiver;
the processor is configured to receive, via the transceiver, first prediction information that is related to cell handover and sent by a terminal;
select at least one candidate target cell;
send, via the transceiver, a first message to a second network device where the selected at least one candidate target cell is located, wherein the first message is used to initiate a handover request;
after receiving a response message to the first message sent by the second network device, send, via the transceiver, a second message to the terminal, wherein the second message is used to instruct the terminal to hand over to one of the selected at least one candidate target cell.

32. A cell handover device, wherein the cell handover device is a second network device, and comprises a processor and a transceiver;
the processor is configured to receive, via the transceiver, a first message sent by a first network device, wherein the first message is used to initiate a handover request;
send, to the first network device via the transceiver, a response message to the first message.

33. A cell handover device, wherein the cell handover device is a terminal, and comprises a processor and a transceiver;
the processor is configured to obtain first prediction information related to cell handover; send, via the transceiver, the first prediction information to a first network device;
receive, via the transceiver, a second message sent by the first network device, wherein the second message is used to instruct the terminal to hand over to one of candidate target cells selected by the first network device;
perform a cell handover operation.

34. A cell handover device, comprising a memory, a processor, and a program stored in the memory and executable on the processor; wherein the processor, when executing the program, implements the cell handover method according to any one of claims 1 to 27.

35. A readable storage medium storing a program, wherein the program, when executed by a processor, implements the steps of the cell handover method according to any one of claims 1 to 27.

36. A computer program product, comprising computer instructions, wherein the computer instructions, when executed by a processor, implement the steps of the cell handover method according to any one of claims 1 to 27.
